## Europäisches Patentamt

## European Patent Office

## Office européen des brevets

(11) Veröffentlichungsnummer: **0 116 715**
**B1**

(12) # EUROPÄISCHE PATENTSCHRIFT

(45) Veröffentlichungstag der Patentschrift:
04.02.87

(51) Int. Cl.⁴: **C 08 L 67/02,** C 08 L 23/16

(21) Anmeldenummer: **83112871.5**

(22) Anmeldetag: **21.12.83**

(54) **Kälteschlagzähe, thermoplastisch verarbeitbare Formmasse aus Poly(butylenterephthalat).**

(30) Priorität: **22.02.83 DE 3306008**

(43) Veröffentlichungstag der Anmeldung:
**29.08.84 Patentblatt 84/35**

(45) Bekanntmachung des Hinweises auf die Patenterteilung:
**04.02.87 Patentblatt 87/6**

(84) Benannte Vertragsstaaten:
**AT BE CH DE FR GB IT LI LU NL SE**

(56) Entgegenhaltungen:
**EP-A-0 044 616**
**US-A-4 172 859**

**PATENT ABSTRACTS OF JAPAN, Band 7, Nr. 118,
21. Mai 1983, Seite (C-167) (1263);
PATENT ABSTRACTS OF JAPAN, Band 6, Nr. 197, 6.
Oktober 1982, Seite (C-128) (1075);**

(73) Patentinhaber: **HÜLS AKTIENGESELLSCHAFT,
Patentabteilung / PB 15 - Postfach 13 20, D-4370
Marl 1 (DE)**

(72) Erfinder: **Dröscher, Michael, Dr., Hetkerbruch 34,
D-4270 Dorsten 11 (DE)**
Erfinder: **Gerth, Christian, Dr., In der Thiebrei 80,
D-4358 Haltern (DE)**
Erfinder: **Burzin, Klaus, Dr., Wellerfeldweg 164,
D-4370 Marl (DE)**

**0 116 715**

**Beschreibung**

Gegenstand der Erfindung ist eine kälteschlagzähe, thermoplastisch verarbeitbare Formmasse aus Poly(butylenterephthalat).

Poly(butylenterephthalat) ist ein wertvoller Konstruktionswerkstoff mit einer Reihe ausgezeichneter Eigenschaften wie hoher Steifigkeit, Oberflächenhärte, Abriebfestigkeit, guter Wärmeformbeständigkeit, Dimensionsstabilität und schneller Verarbeitbarkeit zu komplizierten und großen Formteilen.

Für manche Anwendungsbereiche ist jedoch die Schlagzähigkeit des Poly(butylenterephthalats) insbesondere bei Temperaturen unterhalb von 20°C ungenügend, so daß die Notwendigkeit besteht, Poly(butylenterephthalat)-Formmassen mit verbessertem Niveau der Schlagzähigkeit zu entwickeln.

Es existieren bereits zahlreiche Vorschläge, die Kälteschlagzähigkeit von Poly(butylenterephthalat)-Formmassen durch Einkondensation aliphatischer Dicarbonsäuren oder Diolgemische oder durch Abmischen mit anderen Polymeren wie modifizierten Elastomeren und Polyolefinen zu verbessern.

Allen beschriebenen Maßnahmen haftet jedoch der Mangel an, daß entweder die Zunahme der Kälteschlagzähigkeit nur geringfügig ist oder daß eine deutliche Verbesserung der Kälteschlagzähigkeit mit einer unerwünschten Verschlechterung anderer Eigenschaften, insbesondere der Steifigkeit und Wärmeformbeständigkeit, verbunden ist. So beschreibt DE-A-26 51 560 schlagzähe Formmassen auf Basis eines Copolyesters aus Terephthalsäure, Butan-diol-(1.4) und einer verzweigten gesättigten aliphatischen Dicarbonsäure mit 7 bis 30 Kohlenstoffatomen im Molekül. Copolyester dieses Typs weisen jedoch gegenüber Poly(butylenterephthalat) einen deutlich niedrigeren Schmelzpunkt und verschlechterte Wärmeformbeständigkeit auf; die Zähigkeit in der Kälte ist im Vergleich zu Poly(butylenterephthalat) nicht verbessert.

Abmischungen aus Poly(alkylenterephthalaten) und elastomeren segmentierten Copolyestern auf Basis Terephthalsaure, Alkandiol und Poly(alkylenglykol) genügen zwar den Zähigkeitsanforderungen auch in der Kälte, sind jedoch wegen der niedrigen Steifigkeit unbefriedigend (DE-A-23 63 512); durch die Verwendung der Poly(alkylenglykole) werden jedoch Alterungs- und Lichtstabilität ungünstig beeinflußt.

Versuche, die Kalteschlagzähigkeit von Poly(butylentherephthalat) durch Zusätze von Acrylnitril/Butadien/-Styrol-Pfropfpolymerisaten (DE-A-29 27 576) oder von gepfropften Polyolefinen (DE-A-29 02 468) anzuheben, ergaben entweder Formmassen, bei denen die typischen Eigenschaften des Poly(butylenterephthalats), nämlich hohe Wärmeformbeständigkeit und Steifigkeit, zu stark verschlechtert waren, oder es ergaben sich Formmassen ohne ausreichende Verbesserung der Kälteschlagzähigkeit (DE-A-29 27 576).

Ein ähnliches unbefriedigendes Eigenschaftsbild der Formmassen wird durch Zusatz von kautschukelastischen Pfropfpolymeren auf Basis Acrylat-Copolymer/Acrylnitril/Styrol (DE-A-24 44 584) oder von Pfropfpolymerisaten aus α-Olefin/Vinylester-Copolymeren und polymerisierbaren ungesättigten Carbonsäure(estern) (DE-A-24 54 002) erreicht.

Die bisher wirkungsvollste Ausführungsform der Schlagzähmachung von Poly(butylenterephthalat) mit Hilfe von Elastomeren verlangt die Funktionalisierung von bestimmten Elastomeren mit Maleinsäureanhydrid nach Methoden wie sie z. B. in der DE-A-24 01 149 beschrieben sind. Allerdings tritt bei der Funktionalisierung mit Maleinsäureanhydrid eine Gelbildung infolge von Nebenreaktionen ein, wobei der unerwünschte Gelgehalt des funktionalisierten Kautschuks bis 5 % beträgt.

Aufgabe der vorliegenden Erfindung war es, kälteschlagzähe, gelfreie Poly(butylenterephthalat)-Formmassen mit hoher Steifigkeit und verbesserter Wärmeformbeständigkeit ohne die aufgeführten Nachteile zu entwickeln.

Diese Aufgabe wurde gelöst durch eine Formmasse bestehend aus

A. 66 bis 95 Gew.-Teilen Poly(butylenterephthalat) mit einer Viskositätszahl (J) (nach DIN 16 779, Teil 2) zwischen 70 und 240 cm³/g
und

B. 34 bis 5 Gew.-Teilen eines Reaktionsproduktes aus

1. 99 bis 75 Gew.-% - bezogen auf die Komponente B. - eines Ethylen/α-Olefin/Dien-Terpolymeren, das zu 45 bis 75 Gew.-Teilen Ethylen, zu 20 bis 45 Gew.-Teilen α-Olefin und zu 2 bis 10 Gew.-Teilen eines nicht-konjugierten Diens enthält, wobei das Terpolymere eine Mooney-Viskosität (ML 1 + 4 bei 100°C - gemessen nach DIN 53 523) von 30 bis 130 aufweist,
und

2. 1 bis 25 Gew.-% - bezogen auf das Reaktionsprodukt B. - Bicyclo[2.2.2]-2.3:5.6-dibenzooctadien-(2.5)-dicarbonsäure-(7.8)-anhydrid.

Bis zu 20 Mol-% der Terephthalsäure im Poly(butylenterephthalat) können durch an sich bekannte andere Dicarbonsäuren ersetzt werden. Beispiele geeigneter Dicarbonsäuren sind Isophthalsäure, Phthalsäure, Cyclohexan-1.4-dicarbonsäure, Adipinsäure, Azelainsäure, Decandicarbonsäure.

Bis zu 20 Mol-% des Butandiol-(1.4) im Poly(butylenterephthalat) können durch andere Diole wie beispielsweise Ethylenglykol, Propandiol-(1.3), Hexandiol-(1.6), Neopentylglykol, 1.4-Dimethylolcyclohexan, Dodecan-diol-(1.12) ersetzt sein.

Das für die Abmischung verwendete Poly(butylenterephthalat) wird in üblicher Weise durch Um- oder Veresterung und anschließende Polykondensation von Terephthalsäure oder deren polyesterbildenden Derivaten und Butandiol-(1.4) in Gegenwart von Katalysatoren hergestellt (Sorensen und Campbell, Preparative Methods of Polymer Chemistry, Interscience Publishers Inc., N.Y., 1961, Seiten 111 bis 127; Kunststoff-

2

Handbuch, Band VIII, C. Hanser Verlag München, 1973, bzw. Journal of Polymer Science, Part A 1, 4, Seiten 1851 bis 1859, 1966).

Das Poly(butylenterephthalat), welches erfindungsgemäß eingesetzt wird, besitzt eine Viskositätszahl (J) von 70 bis 240 cm$^3$/g, vorzugsweise von 80 bis 180 cm$^3$/g.

Die Ethylen/$\alpha$-Olefin/Dien-Terpolymeren (Komponente B.1) können in bekannter Weise aus Ethylen, einem oder mehreren $\alpha$-Olefinen mit 3 bis 8 C-Atomen, vornehmlich Propylen und/oder Buten-(1), und einem oder mehreren nicht-konjugierten Dienen mit Hilfe sogenannter Ziegler-Natta-Katalysatoren, die zusätzlich noch Aktivatoren und Modifikatoren enthalten können, in Lösung oder Dispersion bei Temperaturen von -30 bis +100°C, z. B. nach den Verfahren der DE-B-15 70 352, DE-B-15 95 442 und DE-B-17 20 450 sowie der DE-A-24 27 343, hergestellt werden.

Es werden solche Terpolymeren eingesetzt, die aus 45 bis 75 Gew.-Teilen, vorzugsweise 60 bis 75 Gew.-Teilen, Ethylen und aus 20 bis 45 Gew.-Teilen, vorzugsweise 20 bis 30 Gew.-Teilen, eines $\alpha$-Olefins, vorzugsweise Propylen und/oder Buten-(1), bestehen und ein nicht-konjugiertes Dien in einer solchen Menge enthalten, daß die Terpolymeren 0,5 bis 30 Doppelbindungen/1000 C-Atome aufweisen. Diese Maßgabe entspricht einem Gehalt von 2 bis 10 Gew.-Teilen, vorzugsweise 5 bis 10 Gew.-Teilen eines nicht-konjugierten Diens. Besonders geeignete Diene sind cis- und trans-Hexadien-(1.4), Dicyclopentadien, 5-Methylen-, 5-Ethyliden- und 5-Isopropyliden-2-norbornen.

Die Mooney-Viskosität der Terpolymeren liegt im Bereich von 30 bis 130, vorzugsweise von 35 bis 85.

Die Terpolymeren sind in der Komponente B. zu 99 bis 75 Gew.-Teilen, vorzugsweise zu 97 bis 85 Gew.-Teilen enthalten.

Sie sind unter der allgemeinen Bezeichnung EPDM-Kautschuk unter zahlreichen Markennamen handelsüblich.

Die Terpolymeren werden als Krümel, Pulver oder Granulat eingesetzt.

Um ihre Neigung zum Kleben zu mindern, enthalten sie häufig inerte Trennpulver, wie Polyethylen, Talkum oder Aerosil in Mengen bis zu ca. 5 Gew.-%.

Es ist auch möglich, Polymergemische der Terpolymeren mit Polyolefinen, z. B. Polyethylen oder Polypropylen, in Granulatform einzusetzen. Dies ist besonders dann zweckmäßig, wenn das Terpolymere allein z. B. wegen geringen Ethylenanteils, amorpher Struktur oder niedrigen Molekulargewichts sehr klebrig ist.

Die Terpolymeren werden mit Bicyclo[2.2.2]-2.3:5.6-dibenzooctadien-(2.5)-dicarbonsäure-(7.8)-anhydrid (nachstehend als "Anhydrid" bezeichnet) umgesetzt. Die Komponente B. enthält 99 bis 75, vorzugsweise 97 bis 85 Gew.-% Terpolymer und 1 bis 25, vorzugsweise 3 bis 15 Gew.-% "Anhydrid".

Die Zugabe des "Anhydrids" zum Terpolymeren geschieht z. B. durch Mischen des festen "Anhydrids" mit dem in Pulver-, Krümel- oder Granulatform vorliegenden Terpolymeren in einem Schaufelmischer. Nach einem anderen Verfahren wird das "Anhydrid" in einen mit dem Terpolymeren beschickten Kneter dosiert.

Die Umsetzung des "Anhydrids" mit dem Terpolymeren erfolgt vorzugsweise in einem kontinuierlich oder diskontinuierlich arbeitenden Kneter bei Temperaturen zwischen 270 und 320 °C und Reaktionszeiten zwischen etwa 30 Sekunden und 30 Minuten, vorzugsweise bei Temperaturen zwischen 280 und 315°C und Zeiten zwischen ca. einer und fünf Minuten im kontinuierlichen, zwischen ca. fünf und zwanzig Minuten im diskontinuierlichen Kneter.

Als Reaktionszeiten gelten bei Verwendung von Trockenmischungen aus "Anhydrid" und dem Terpolymeren die mittleren Verweilzeiten der Schmelze im Kneter, bei einer Dosierung des "Anhydrids" in den Kneter die Verweilzeit der Schmelze bei Reaktionstemperatur nach endgültiger Zugabe des "Anhydrids".

Die erfindungsgemäßen Formmassen werden aus dem Poly(butylenterephthalat) und dem mit dem "Anhydrid" umgesetzten Terpolymeren durch Umschmelzen z. B. in einem Doppelschneckenkneter nach üblichen Methoden des Standes der Technik hergestellt. Für eine gute Einmischung des modifizierten Terpolymeren ist z. B. durch Verwendung von Knetblöcken zu sorgen.

Die erfindungsgemäßen Formmassen enthalten 66 bis 95 Gew.-Teile, vorzugsweise 75 bis 90 Gew.-Teile, Poly(butylenterephthalat) und 5 bis 34 Gew.-Teile, vorzugsweise 25 bis 10 Gew.-Teile, des Reaktionsproduktes (Komponente B.) aus Terpolymeren und "Anhydrid".

Zur weiteren Verbesserung der Kälteschlagzähigkeit ist es von Vorteil, die in der Schmelze hergestellte Mischung aus Poly(butylenterephthalat) und der Komponente B. einer thermischen Nachbehandlung unter Anschluß von Sauerstoff zu unterziehen. Diese ist besonders dann von Vorteil, wenn nur geringe Anteile an Komponente B. verwendet werden. Man erwärmt die Mischung z. B. als Granulat in Abwesenheit von Sauerstoff ($N_2$-Strom, Vakuum), vorzugsweise in einem Fließbett, während mehrerer Stunden auf Temperaturen bis ca. 5°C unterhalb des Schmelzpunktes. Die thermische Nachbehandlung kann auch vorteilhaft nach den in DE-C-30 33 468 und DE-C-30 33 469 beschriebenen Methoden unter Verwendung von Butandiol-(1.4) geschehen. Möglich ist auch die thermische Nachbehandlung in einem Entgasungsextruder.

Ein nach dem Stande der Technik üblicher Zusatz von Additiven, wie z. B. Stabilisatoren, Verarbeitungshilfsmitteln, Füllstoffen wie z. B. Mineralien oder Mikroglaskugeln, Ruß und Pigmenten, kann zugleich oder nach der thermischen Nachbehandlung erfolgen.

Die Formmassen gemäß der Erfindung zeichnen sich durch eine außergewöhnliche Kombination von Eigenschaften aus. Die Formmassen enthalten keine Gelanteile und lassen sich hervorragend verarbeiten. Sie verfügen über eine ungewöhnlich hohe Kälteschlagzähigkeit, insbesondere noch bei Temperaturen zwischen -20°C und -40°C. Diese ausgezeichnete Kälteschlagzähigkeit führt zu einer deutlich verbesserten Duktilität, einer größeren Kratzfestigkeit und zu einer deutlich verminderten Anfälligkeit gegen einen überraschenden

**0116715**

Zusammenbruch der Eigenschaften verglichen mit herkömmlichen Formmassen.

Die in der Beschreibung und in den Versuchen angeführten Parameter wurden mittels der nachstehend genannten Meßmethoden bestimmt:

Die Viskositätszahl (J) des PBTP wurde nach DIN 16 779, Teil 2, an Lösungen von 0.5 g Poly(butylenterephthalat) in 100 ml Phenol/o-Dichlorbenzol (50/50 Gew.-Teile) bei 25°C bestimmt.

Der Gelgehalt ist derjenige Teil des funktionalisierten Kautschuks, der in siedendem Tetrahydrofuran bei Atmosphärendruck nach 48 Stunden ungelöst bleibt.

Die Mooney-Viskosität der Terpolymeren wurde gemäß DIN 53 523, Teil 1 bis 3 (unter den Bedingungen ML $(1 + 4)$ 100°C) bestimmt.

Die Kerbschlagzähigkeit $(a_K)$ der Formmassen wurde nach DIN 53 453 an Normkleinstäben mit Rechteckkerbe gemessen.

**Beispiele**

**Herstellung des Reaktionsproduktes aus Terpolymer und "Anhydrid" (Komponente B.)**

**Reaktionsprodukt 1**

8.5 Gew.-Teile Bicyclo[2.2.2]-2.3:5.6-dibenzooctadien-(2.5)-dicarbonsäure-(7.8)-anhydrid werden mit 92.5 Gew.-Teilen eines pulverförmigen Terpolymeren aus Ethylen, Propylen und 5-Ethyliden-norbornen gemischt, das 30 Gew.-% Polypropylen und 7 Doppelbindungen pro 1000 C-Atomen enthält und eine Mooney-Viskosität von 85 aufweist (Ethylengehalt des Terpolymeren 73 Gew.-%) in einem Labormischer gemischt.

Die Mischung wird in einem Doppelschneckenkneter, dessen Heizzonen mit Ausnahme der ersten gekühlten auf 300°C eingestellt sind, geschmolzen, wobei die gewünschte Umsetzung stattfindet, und anschließend granuliert. Es wird auf eine Restfeuchte von < 1 % getrocknet. Ein Gelgehalt wird nicht beobachtet.

**Reaktionsprodukt 2**

Es wird analog wie bei der Herstellung des Reaktionsproduktes 1 verfahren, mit der Ausnahme, daß das Terpolymere sonst an sich gleicher Zusammensetzung eine Mooney-Viskosität von 35 besitzt.

**Reaktionsprodukt 3**

Es werden 4,25 Gew.-Teile Bicyclo[2.2.2]-2.3:5.6-dibenzooctadien-(2.5)-dicarbonsäure-(7.8)-anhydrid mit 95.75 Gew.-Teilen eines krümelförmigen Terpolymeren (73 Gew.-% Ethylen, 22 Gew.% Propylen, Dien: 5-Ethyliden-norbornen; 7 Doppelbindungen/1000 C-Atome) mit einer Mooney-Viskosität von 85 gemischt. Die Herstellung des Gemisches und der Umsetzung geschehen analog der Arbeitsweise bei Reaktionsprodukt 1.

**Herstellung der erfindungsgemäßen Formmassen I bis III**

Jeweils 80 Gew.-Teile Homo-Poly(butylenterephthalat) mit einer Viskositätszahl (J) = 92 $cm^3/g$ werden mit jeweils 20 Gew.-Teilen eines der drei oben beschriebenen Reaktionsprodukte gemischt. Diese Mischung wird in einem Doppelschneckenkneter, dessen Wirkung durch Knetblöcke verstärkt wurde, umgeschmolzen und anschließend granuliert.

Jeweils 120 kg der Formmassen I bis III werden bei 200°C für 24 Stunden in einem 500 l-Taumeltrockner einer thermischen Nachbehandlung im Vakuum unterzogen.

Die Viskositätszahl bzw. die Kerbschlagzähigkeit der Formmassen sind in nachstehender Tabelle aufgeführt. Zum Vergleich wird das unvermischte Homo-Poly(butylenterephthalat), wie es bei der Herstellung der Formmassen eingesetzt wurde, verwendet (Formmasse A).

4

Tabelle

| Formmasse | Zusammensetzung Gew.-Teile | J [cm³/g] | Kerbschlagzähigkeit [kJ/m²] | | |
|---|---|---|---|---|---|
| | | | 23 °C | -20 °C | -40 °C |
| I | 80 PBTP*) (J = 92 cm³/g) 20 Reaktionsprodukt 1 | 130 | 47 | 13 | 10 |
| II | 80 PBTP*) (J = 92 cm³/g) 20 Reaktionsprodukt 2 | 121 | 50 | 16 | 11 |
| III | 80 PBTP*) (J = 92 cm³/g) 20 Reaktionsprodukt 3 | 121 | 42 | 12 | 7 |
| A | 100 PBTP*) (thermisch nachbehandelt) | 120 | 3 | 3 | 3 |

*) PBTP = Poly(butylenterephthalat)

**Patentansprüche**

1. Kälteschlagzähe, thermoplastisch verarbeitbare Formmasse bestehend aus
A. 66 bis 95 Gew.-Teilen Poly(butylenterephthalat) mit einer Viskositätszahl (J) (nach DIN 16 779, Teil 2) zwischen 70 und 240 cm³/g
und
B. 34 bis 5 Gew.-Teilen eines Reaktionsproduktes aus
1. 99 bis 75 Gew.-% - bezogen auf die Komponente B. - eines Ethylen/α-Olefin/Dien-Terpolymeren, das zu 45 bis 75 Gew.-Teilen Ethylen, zu 20 bis 45 Gew.-Teilen α-Olefin und zu 2 bis 10 Gew.-Teilen eines nicht-konjugierten Diens enthält, wobei das Terpolymere eine Mooney-Viskosität (ML 1 + 4 bei 100°C - gemessen nach DIN 53 523) von 30 bis 130 aufweist,
und
2. 1 bis 25 Gew.-% - bezogen auf das Reaktionsprodukt B. - Bicyclo[2.2.2] -2.3:5.6-dibenzooctadien-(2.5)-dicarbonsäure-(7.8)-anhydrid.
2. Formmasse nach Anspruch 1,
dadurch gekennzeichnet,
daß sie unter Ausschluß von Sauerstoff thermisch nachbehandelt worden ist.

**Claims**

1. A moulding composition which is impact-resistant at low temperatures but processable thermoplastically, composed of
A) 66 to 95 parts by weight poly(butylene terephthalate) of viscosity number (J) (according to DIN 16779, part 2) from 70 to 240 cm³/g, and
B) 34 to 5 parts by weight of a reaction product of
1) 99 to 75 wt%, based on the component B, of an ethylene/α-olefin/diene terpolymer containing 45 to 75 parts by weight ethylene, 20 to 45 parts by weight α-olefin and 2 to 10 parts by weight of a non-conjugated diene, the terpolymer having a Mooney viscosity (ML 1 + 4 at 100°C - measured according to DIN 53 523) of 30 to 130, and
2) 1 to 25 wt%, based on the reaction product B, of bicyclo [2,2,2]-2,3:5,6-dibenzooctadiene-(2,5) dicarboxylic-(7,8) anhydride.
2. A moulding composition according to claim 1, characterised in that it is thermally after-treated in the absence of oxygen.

**Revendications**

1. Matière à mouler résiliente à froid, pouvant être transformée thermoplastiquement, formée de

A. 66 à 95 % parties en poids de poly-(téréphtalate de butylène) ayant un indice de viscosité (J) (selon DIN 16 779, partie 2) de 70 à 240 cm³/g

et

B. 34 à 5 parties en poids d'un produit de réaction obtenu à partir

1. de 99 à 75 % en poids, relativement au constituant B - d'un terpolymère éthylène alpha-oléfine/diène qui contient de 45 à 75 parties en poids d'éthylène, de 20 à 45 parties en poids d'alpha-oléfine et de 2 à 10 parties en poids d'un diène non-conjugué, le terpolymère présentant une viscosité Mooney (ML 1 + 4 à 100°C - mesurée selon DIN 53 523) de 30 à 130,

et

2. de 1 à 25 % en poids - relativement au produit de réaction B d'anhydride d'acide bicyclo [ 2.2.2] - 2,3 : 5,6-dibenzo-octadiène-(2,5)-dicarboxylique-(7,8).

2. Matière à mouler selon la revendication 1, caractérisée par le fait qu'elle a été post-traitée thermiquement avec exclusion d'oxygène.